# EUROPEAN PATENT APPLICATION

(11) **EP 4 682 084 A1**
(43) Date of publication of application: **21.01.2026**
(21) Application number: 24189750.3
(22) Date of filing: 19.07.2024
(51) Int. Cl.: B65G 1/04

(54) **A CONVEYOR SYSTEM**

(71) Applicant: AutoStore Technology AS, 5578 Nedre Vats (NO)
(72) Inventor: Håland, Christian, 5578 Nedre Vats (NO)
(74) Representative: Kilburn & Strode LLP

(57) **Abstract**

The disclosure relates to a conveyor system for a port in an automated storage and retrieval system, the conveyor system comprising: a rail; and a cart moveable along the rail between a first position and a second position, and configured to receive a storage container thereon; wherein the cart comprises a gripping mechanism configured to releasably engage a storage container on the cart so as to hold the storage container in a fixed position relative to the cart as the cart moves along the rail.

## Description

### TECHNICAL FIELD

The disclosure relates to a conveyor system. More particularly, it relates to a conveyor system for a port in an automated storage and retrieval system comprising a storage grid configured to store one or more containers therein.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Ports contain conveyor systems which convey containers from a first position (e.g., within a port) to a second position, such as a picking and packing location. Such conveyor systems may comprise conveyor belts for receiving containers, for example, or moveable carts which receive and move the containers. Such arrangements may move the containers relatively slowly between the first and second positions, however.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 is a perspective view of a conveyor system for an automated storage and retrieval system;
Fig. 6 is a perspective view of a picking cart of the conveyor system shown in Fig. 5;
Fig. 7 is a perspective view of a gripping mechanism for the picking cart shown in Fig. 6;
Fig. 8 is a perspective view of a buffer cart of the conveyor system shown in Fig. 5;
Figs. 9a and 9b are side views of a gripping mechanism for the buffer cart shown in Fig. 8; and
Fig. 10 is a schematic drawing of a conveyor system for an automated storage and retrieval system.

### DETAILED DESCRIPTION

In overview, the disclosure relates to a conveyor system for a port in an automated storage and retrieval system. The conveyor system comprises a rail, and a cart which is moveable along the rail between a first position (e.g., at a port of the storage grid, where containers can be added to or removed from the storage grid) and a second position (e.g., at a picking and/or packing location, where items can be added to or removed from a storage container). The cart is configured to receive a storage container thereon in order to move the storage container between the two positions. The cart comprises a gripping mechanism which is configured to releasably engage a storage container on the cart, and so hold the storage container in a fixed position relative to the cart as the cart moves along the rail. This arrangement allows the cart to accelerate and move faster than known arrangements, as the storage container is held in position on the cart by the gripping mechanism and does not slide or otherwise move on the cart as the cart accelerates. Movement of a storage container between the first and second locations can therefore be performed more quickly, increasing efficiency of the conveyor system. In examples, as described herein, the conveyor system may comprise multiple carts, each having a respective gripping mechanism.

### Automated storage and retrieval system overview

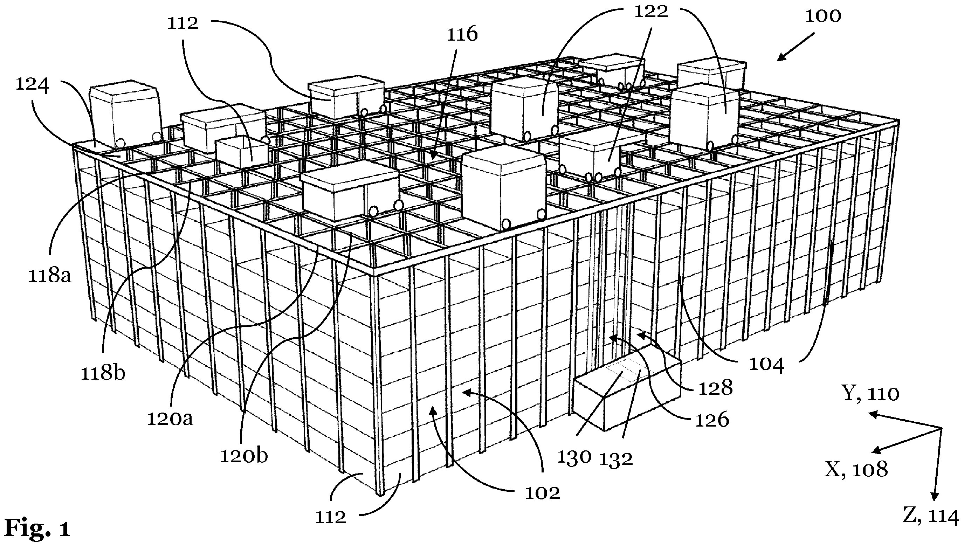

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (e.g., a conveyor system as described herein; not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to another, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, conveyor systems, transport vehicles, lifts or robots.

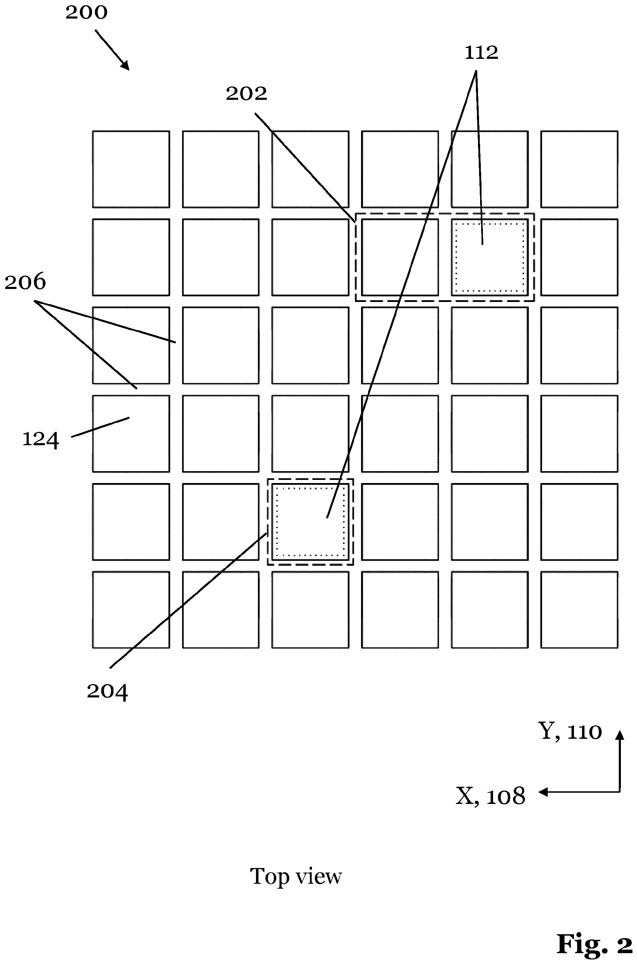

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

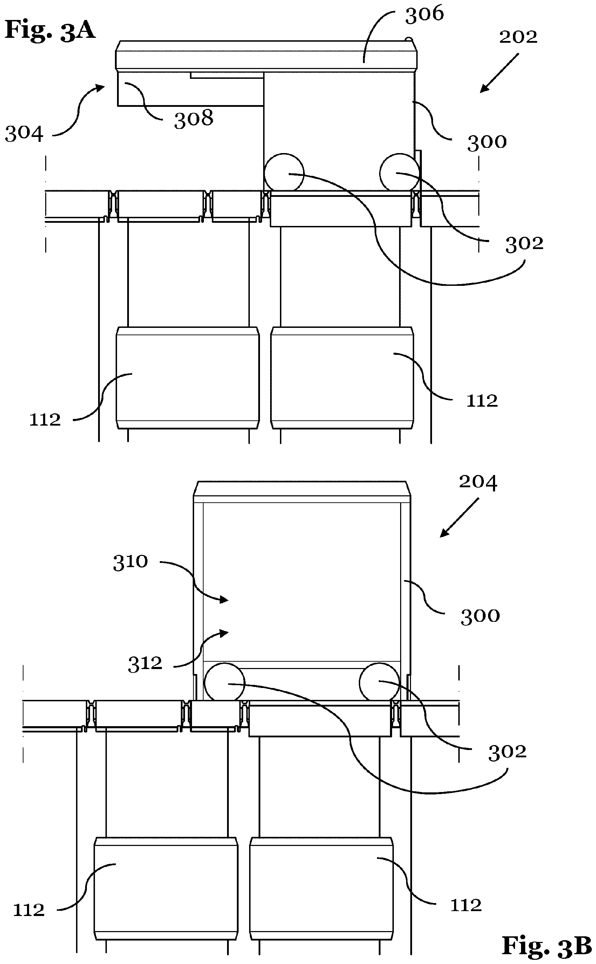

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

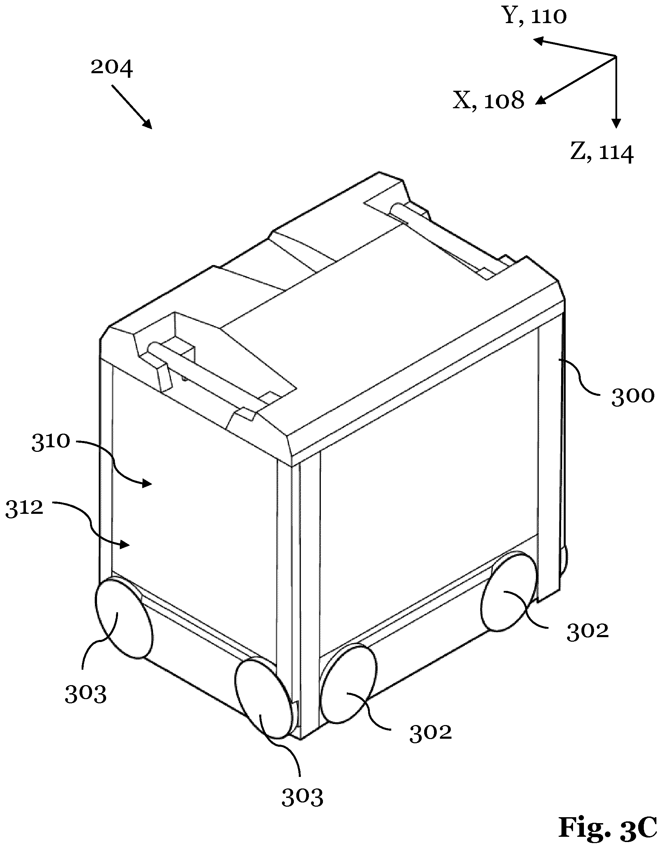

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

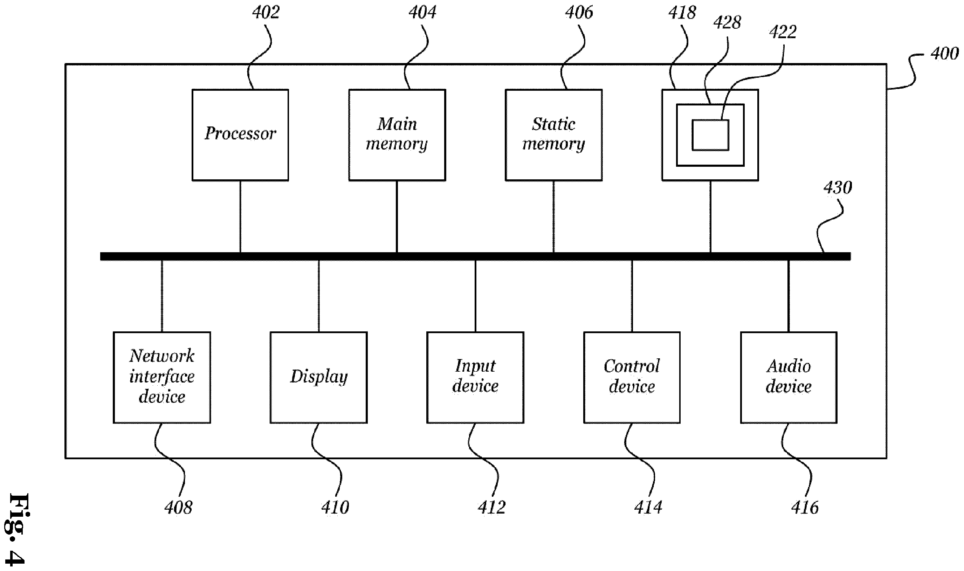

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. For example, the instructions 422 may embody a method of operating a conveyor system as described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein (e.g., a method of operating a conveyor system). The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

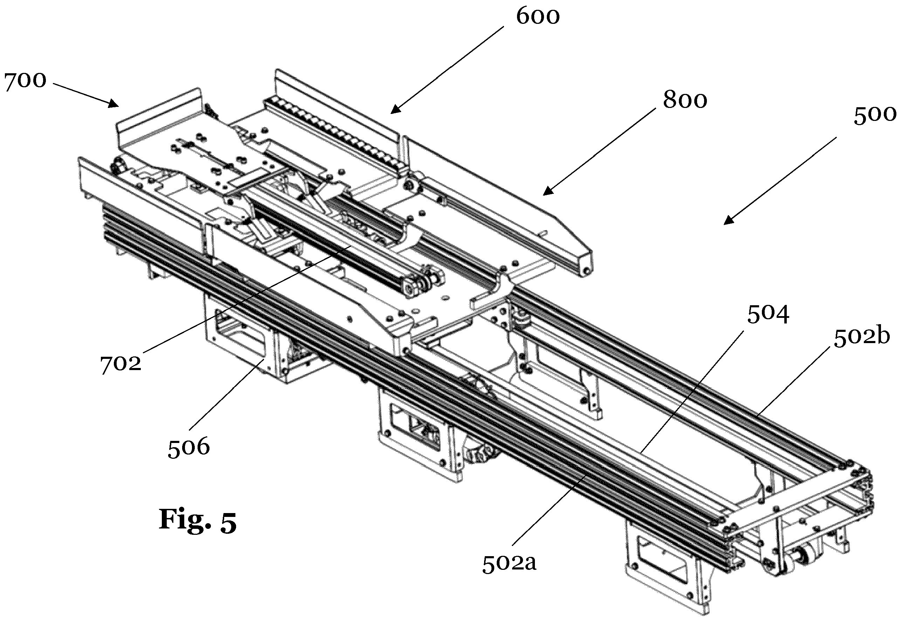

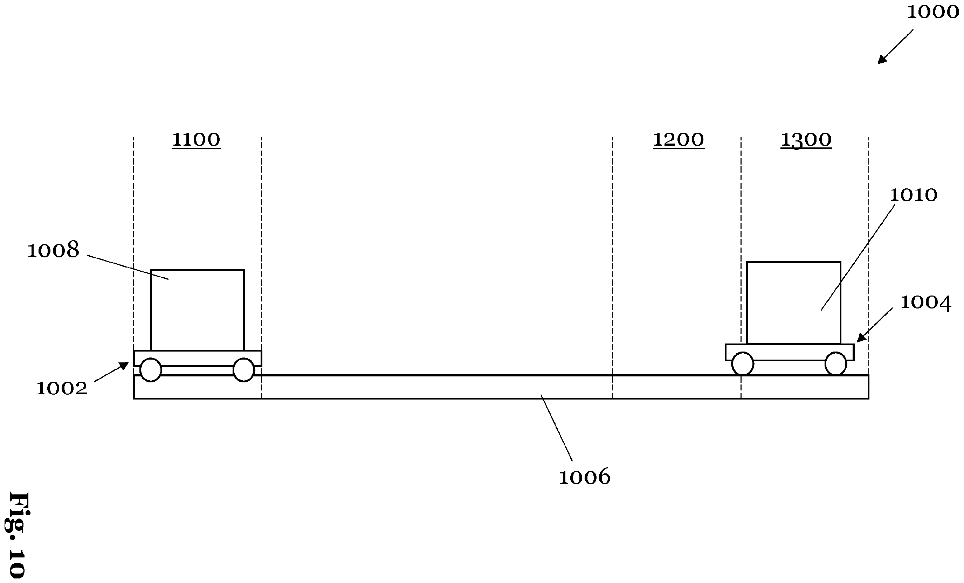

Fig. 5 is a perspective view of a conveyor system 500 for a port in an automated storage and retrieval system (e.g., as described above with respect to Fig.1). The conveyor system 500 comprises a picking cart 600 (which may also be referred to herein as a first cart) and a buffer cart 800 (which may also be referred to herein as a second cart) which are each moveable along a pair of rails 502a, 502b. Although two carts are shown, it will be appreciated that in other examples of the invention, a conveyor system may be provided with fewer carts, or with additional carts, as required. Each of the picking cart 600 and the buffer cart 800 are configured to receive a storage container or bin (such as a bin 112 described above) thereon, and in moving along the rails 502a, 502b are able to move bins to suitable positions. In particular, a first end of the rails 502a, 502b may be at or about a location for picking and/or packing a storage container (e.g., by a person in a warehouse), and a second end of the rails 502a, 502b may be at or about a port column of a storage grid (e.g., port columns 126, 128 as described above) for transferring a storage container in and/or out of the storage grid. The rails 502a, 502b also provide a buffer location for holding a bin away from each of the picking/packing location and the transferring location, as described below. Movement of a picking cart and a buffer cart in such a conveyor system is described in more detail below with respect to Fig. 10. Each of the picking cart 600 and the buffer cart 800 may be moved along the rails 502a, 502b using a motorised chain, belt or pulley system 504 which is connected to the underside of the picking cart 600 and the buffer cart 800 (for example, a respective pulley is connected to each of the picking cart 600 and the buffer cart 800). Of course, it will be appreciated that any other suitable mechanism may alternatively be used to move the picking cart 600 and the buffer cart 800.

In use, storage containers may be loaded to and/or unloaded from the picking cart 600 and the buffer cart 800 vertically (e.g., by container handling vehicles as described above). The picking cart 600 and buffer cart 800 are therefore open upwardly in order to receive a storage container thereon. Each of the picking cart 600 and the buffer cart 800 comprises a respective gripping mechanism configured to releasably engage a storage container on the cart so as to hold the storage container in a fixed position relative to the cart as the cart moves along the rails 502a, 502b (in particular, fixed relative to the horizontal plane of the cart, but which may still allow a bin to be deposited onto or removed from the cart in a vertical direction). By securely holding the storage containers in this way, the picking cart 600 and the buffer cart 800 may accelerate and move more rapidly than known arrangements, as the bin is not able to slide off of the cart when the cart is moving, increasing efficiency of the storage grid in general and the conveyor system 500 in particular. The gripping mechanism of the picking cart 600 and the buffer cart 800 are configured differently, to suit the different uses of each cart, as described below.

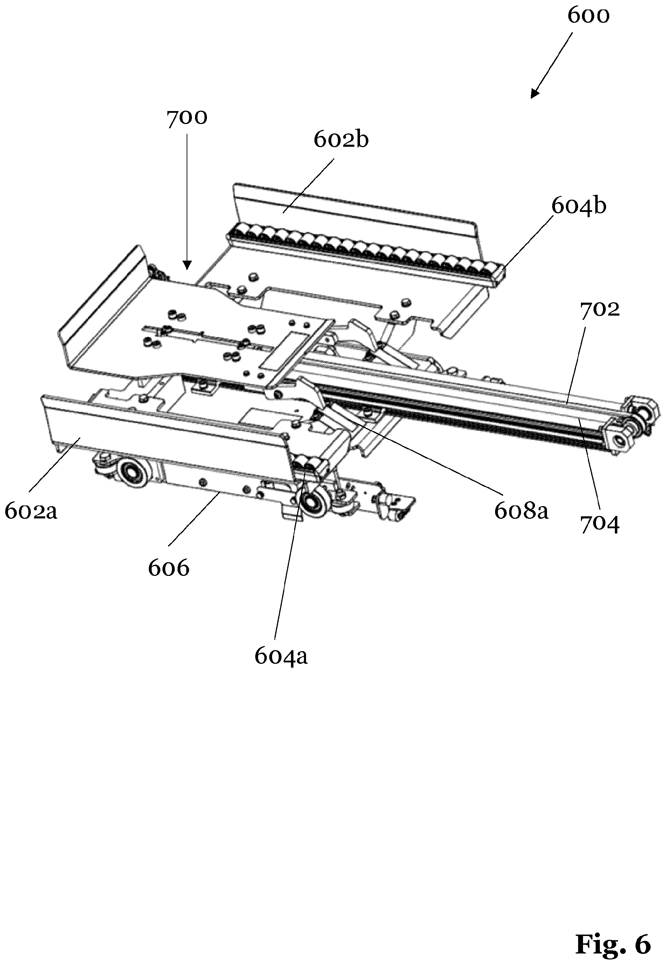

Fig. 6 is a perspective view of the picking cart 600, showing a gripping mechanism 700 mounted thereto. The picking cart 600 comprises L-beam side members 602a, 602b which define the lateral edges of the picking cart 600. The upstanding portions of the side members 602a, 602b are arranged to prevent lateral movement of a storage container received on the picking cart. A roller track 604a, 604b is secured to the base portion of each side member 602a, 602b, with the roller tracks 604a, 604b being arranged to support a storage container on the picking cart 600. The roller tracks 604a, 604b also allow a storage container to be pushed from the picking cart 600 to the buffer cart 800 by the gripping mechanism 700 during use of the conveyor system 500, as described below.

The underside of the picking cart 600 comprises bogies 606 for mounting the picking cart 600 to, and allowing movement of the picking cart 600 along, the rails 502a, 502b of the conveyor system 500. Each bogie 606 comprises a plurality of freely rotating wheels which are configured to fit within the rails 502a, 502b and roll along a rail surface. Although not shown in Fig. 6, the underside of the picking cart 600 also comprises a connector for engaging the pulley system 504 of the conveyor system 500, such that the pulley system 504 is able to move the picking cart 600 along the rails 502a, 502b independently of the buffer cart 800.

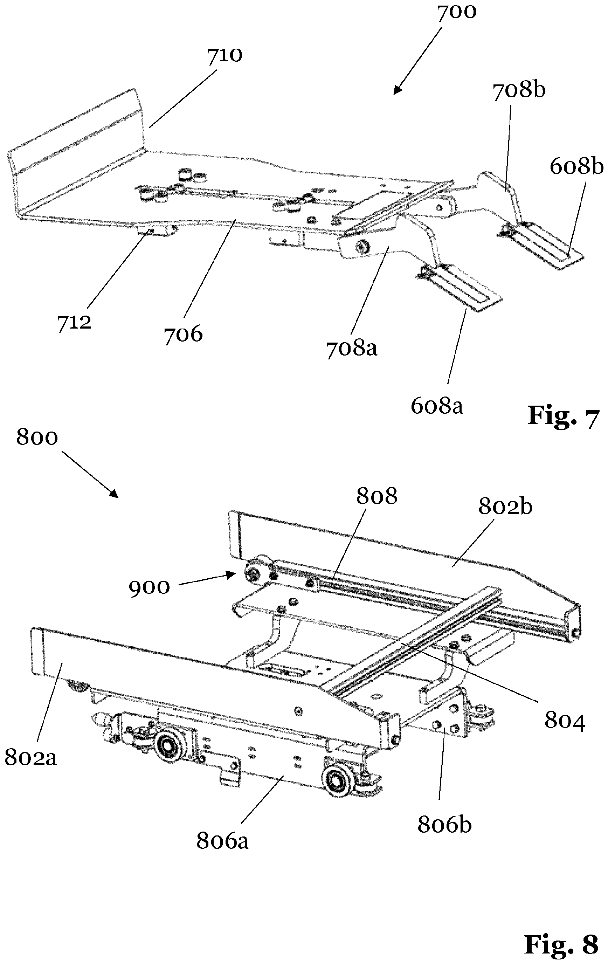

A gripping mechanism 700 is mounted to a top side of the picking cart 600. A perspective view of the gripping mechanism 700 is shown in Fig. 7. The gripping mechanism 700 is mounted to the picking cart 600 via a pusher rail 702, wherein the gripping mechanism 700 is moveable along the pusher rail 702 by actuation of a pusher pulley system 704. As shown in Fig. 6, the gripping mechanism 700 is at a rearmost position on the picking cart 600, but by moving the gripping mechanism 700 forward along the pusher rail 702 a storage container can be pushed off of the picking cart 600 (and, for example, onto a buffer cart 800 during use of the conveyor system 500). Cam surfaces 608a, 608b are also mounted to a top side of the picking cart 600, such that the gripping mechanism 700 engages or disengages a storage container as the gripping mechanism 700 moves along the pusher rail 702 as described herein.

The gripping mechanism 700 comprises a base portion 706, having two engagement members 708a, 708b pivotably connected at a front of the base portion 706, and an upstanding flange 710 at a rear of the base portion 706. On a lower side of the base portion 706, the gripping mechanism 700 comprises a guide bracket 712 which slidably mounts the gripping mechanism 700 on the pusher rail 702.

Each engagement member 708a, 708b is a generally T-shaped arm which is pivotably connected to the base portion 706 (e.g., via a bracket) at the base of the T-shape such that the engagement member rotates in the plane of the T-shape. A first arm of the T-shape is directed upwards in order to releasably engage a side of a storage container on the picking cart 600, and a second arm of the T-shape is directed downwards to rest on a cam surface 608a, 608b. In use, a storage container is received on the base portion 706 such that the engagement members 708a, 708b are arranged to releasably engage the side of a storage container, wherein in a raised position (as shown in Fig. 7) the engagement members 708a, 708b engage the storage container and in a lowered position the engagement members 708a, 708b do not engage the storage container.

The cam surfaces 608a, 608b are angled relative to the horizontal plane of the picking cart 600. As a result, when the gripping mechanism 700 is at a rear of the pusher rail 702, the engagements members 708a, 708b rest on the cam surfaces 608a, 608b towards the upper end of the cam surfaces 608a, 608b, and therefore are in a raised position for engaging a side of a storage container. When the engagement members 708a, 708b are in this raised position, a storage container on the picking cart 600 is secured between the upstanding flange 710, engagement members 708a, 708b, and the L-beam side members 602a, 602b, such that the storage container has a reduced range of movement parallel to the horizontal plane of the picking cart 600. As a result, the picking cart 600 can be accelerated and moved quickly along the rails 502, 502b without the storage container becoming dismounted from the picking cart 600.

When the gripping mechanism 700 is moved forward, the engagement members 708a, 708b are also move forward, and downwards along the slope of the cam surfaces 608a, 608b and as they are pivotably connected to the base portion 706 are thereby moved towards a lowered position in which the engagement members 708a, 708b do not engage a side of a storage container. A storage container is then free to move off of the picking cart 600 in the forward direction, and for example can be pushed onto the buffer cart 800 by the gripping mechanism 700. In particular, when the picking cart 600 and the buffer cart 800 are positioned adjacent to one another on the rails 502a, 502b (e.g., as shown in Fig. 5, though they may be positioned adjacent to one another at any point along the rails 502a, 502b), the pusher rail 702 extends from the picking cart 600 to be received by the buffer cart 800, allowing the gripping mechanism 700 to slide towards and at least partially overlap with the buffer cart 800 to move a storage container from the picking cart 600 to the buffer cart 800.

The cam surfaces 608a, 608b comprise a low-friction and/or a wear resistant coating on their upper surface (e.g., tribo tape, tribo coating or the like) to reduce friction between the cam surfaces 608a, 608b and the engagement members 708a, 708b, and/or prolong the life span of the cam surfaces 608a. 608b.

Fig. 8 shows a perspective view of the buffer cart 800, which has a gripping mechanism 900 mounted thereto. The buffer cart 800 comprises L-shaped side members 802a, 802b, which define a gap therebetween for receiving an end of the pusher rail 702, as described above, when the buffer cart 800 is adjacent to the picking cart 600, as shown in Fig. 5. Each side member 802a, 802b comprises a support bar 808 which is configured to receive a storage container thereupon, and to which is mounted a respective gripping mechanism 900 for releasably engaging a storage container on the buffer cart 800. A cross-beam 804 is connected between the side members 802a, 802b which acts as a bracing component to strengthen the buffer cart 800, but which also constrains movement of a storage container received on the buffer cart 800. This cross-beam 804 is not shown in Fig. 5, for clarity, to better show how the pusher rail 702 extends to the buffer cart 800.

The underside of the buffer cart comprises bogies 806a, 806b for mounting the buffer cart 800 to, and allowing movement of the buffer cart 800 along, the rails 502a, 502b of the conveyor system 500. Each bogie 806a, 806b comprises a plurality of freely rotating wheels which are configured to fit within the rails 502a, 502b and roll along a rail surface. Although not shown in Fig. 8, the underside of the buffer cart 800 also comprises a connector for engaging the pulley system 504 of the conveyor system 500, such that the pulley system 504 is able to move the buffer cart along the rails 502a, 502b independently of the picking cart 600.

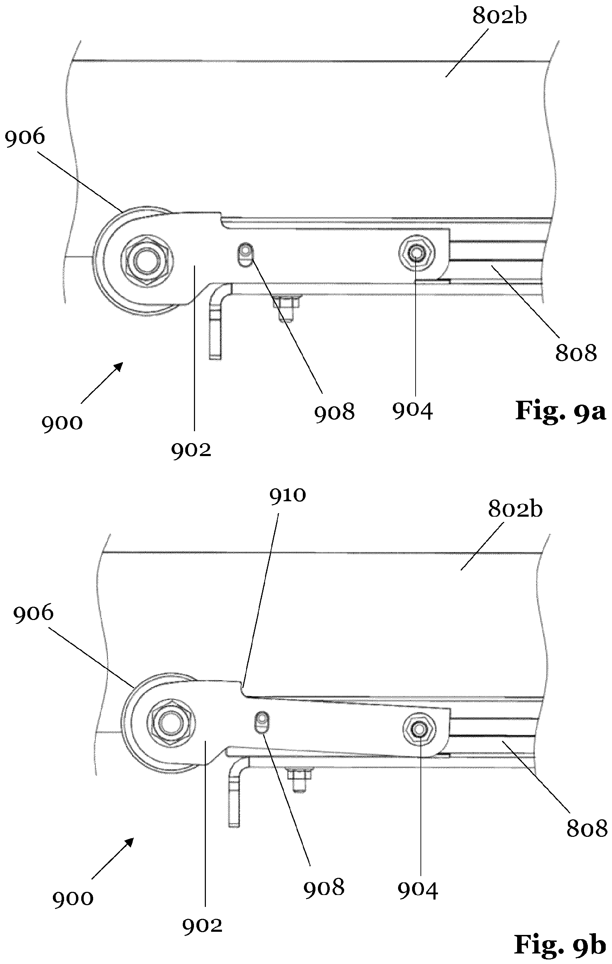

The gripping mechanism 900 is described in relation to Figs. 9a and 9b, wherein Fig. 9a is a side view of the gripping mechanism 900 in a configuration in which the gripping mechanism does not engage a side of a storage container on the buffer cart 800, and Fig. 9b is a side view of the gripping mechanism 900 in a configuration in which the gripping mechanism does engage a side of a storage container on the buffer cart 800.

The gripping mechanism 900 comprises an engagement member 902 which is pivotably connected to the buffer cart 800 at a first end by a bolt 904 such that the engagement member 902 is moveable between a lowered position (as in Fig. 9a) for not engaging a side of a storage container and a raised position (as in Fig. 9b) for engagement a side of a storage container. The bolt 904 affixes the engagement member to the support bar 808, which is itself secured to the L-shaped side member 802b.

At a second end of the engagement member 902, the gripping mechanism 900 comprises a wheel 906 (or, in other examples, a roller), which allows a storage container to be easily slid onto the buffer cart 800 over the gripping mechanism 900 (e.g., from left to right, as seen from the perspective of Fig. 9a).

The weight of the storage container as it passes over the wheel 906 of the gripping mechanism 900 depresses the engagement member 902 towards the lowered position (as shown in Fig. 9a). When the storage container rest on the support bar 808 (i.e., when the load is removed from the gripping mechanism 900), the engagement member 902 is urged back to the raised position (as shown in Fig. 9b) by a biasing means (e.g., a spring) which is mounted in an aperture 908 through the engagement member 902, such that a first end of the spring engages the support bar 808 and a second end of the spring engages the engagement member 902 in order to bias the engagement member 902 towards the raised position. Of course, it will be appreciated that any suitable arrangement for biasing the engagement member 902 towards the raised position may be used.

The engagement member 902 is shaped such that it is wider at the second end (about the wheel 906) than the first end. This provides a lip 910 which is arranged to engage a side of a storage container when the storage container is on the buffer cart 800 (and rests on the support bar 808) and the engagement member 902 is in the raised position (as shown in Fig. 9b). In this way, a storage container is held in a fixed position relative to the buffer cart 800 between the engagement member 902 and the cross-beam 804 such that the storage container has a reduced range of movement parallel to the horizontal plane of the buffer cart 800. As a result, the buffer cart 800 can be accelerated and moved quickly along the rails 502a, 502b without the storage container becoming dismounted from the buffer cart 800. However, the gripping mechanism 900, as described above, is also configured such that a storage container can be easily slid onto the buffer cart 800 by depressing the engagement member 902 as it passes onto the buffer cart 800 (e.g., pushed onto the buffer cart 800 from the picking cart 600), and removed vertically from the buffer car 800 (e.g., by a container-handling vehicle of the storage system).

A method of operating a conveyor system according to the present invention will now be described, with reference to Fig. 10 which shows a schematic drawing of a conveyor system 1000 for an automated storage and retrieval system. It will be appreciated that the conveyor system 1000 depicted schematically in Fig. 10 may be substantially the same as the conveyor system 500 described above with respect to Figs. 5 to 9.

The conveyor system 1000 comprises a picking cart 1002 (which maybe a picking cart 600 as described above) and a buffer cart 1004 (which may be a buffer cart 800 as described above) which are each moveable along a rail 1006 (which may be the rails 502a, 502b as described above). Each of the picking cart 1002 and the buffer cart 1004 are configured to receive a respective storage container 1008, 1010 thereon, and in moving along the rail 1006 are able to move the storage containers to suitable positions.

A first end of the rail 1006 is at a picking location 1100, for picking and/or packing a storage container (e.g., by a person in a warehouse). For example, the picking location 1100 may be enclosed by a port or the like, which provides access to the storage container when the storage container is at the picking location 1100.

A second end of the rail 1006 is at a port column of a storage grid (e.g., port columns 126, 128 as described above). The second end of the rail 1006 defines two positions. There is a loading location 1200, which is situated so as to allow storage containers to be vertically loaded or unloaded from a cart which is located in the loading location, by a container-handling vehicle of a storage grid. There is also a buffer position 1300, the utility of which will be described below. In some examples, a conveyor system may comprise only a single cart, and so a buffer position may not be required. Fig. 10 shows that the buffer cart 1004 is between the loading location 1200 and the buffer location 1300.

The rail 1006 may be any suitable length according to the required distance between the picking location 1100 and the loading location 1200. In some examples the rail 1006 may not be linear, but may curve if required by a particular warehouse or storage grid layout, for example.

Fig. 10 shows that the picking cart 1002 is in a position at the picking location 1100, allowing the storage container 1008 thereupon to be picked and/or packed. However, it will be appreciated that the picking cart 1002 is moveable to any another position along the rail 1006 (as long as it is not blocked by the buffer cart 1004), for example to the loading location 1200. The buffer cart 1004 is also moveable to any suitable position along the rail 1006.

In use, the picking cart 1002 is moved to a position at the loading location 1200, where a storage container is positioned on the picking cart 1002 by a container-handling vehicle or the like. When the storage container is on the picking cart 1002, it is held in a fixed position by a gripping means, as described above. The picking cart 1002 is then moved along the rail 1006 to a position at the picking location 1100, allowing the storage container to be picked and/or packed (for example, the picking cart 1002 may be moved by a pulley system, such as the pulley system 504).

While the picking cart 1002 is at the picking location 1100, the buffer cart 1004 is moved to a position at the loading location 1200 to remove a container (e.g., by a vehicle-handling vehicle or the like), if a container is present on the buffer cart 1004. The buffer cart 1004 is then moved to a position adjacent to the picking cart 1002 (e.g., substantially as shown in Fig. 5). When items have been picked from or packed into the storage container on the picking cart 1002, the picking cart 1002 and the buffer cart 1004 are each moved along the rail 1006 towards the rear of the rail 1006.

Simultaneously with this movement, or when the picking cart 1008 and the buffer cart 1010 are at rest adjacent to one another at a position along the rail 1006, the gripping mechanism of the picking cart 1002 is used to push the storage container from the picking cart 1002 and onto the buffer cart 1004. This movement of the gripping mechanism releases engagement means from the storage container as described above with respect to Figs. 6 and 7 to allow the storage container to be moved to the buffer cart 1004. As described above with respect to Figs 9a and 9b, as the storage container is moved onto the buffer cart 1004 the engagement member of the buffer cart 1004 is depressed, then when the storage container is upon the buffer cart 1004 the engagement member raises again and so engages the storage container to hold the storage container securely in place.

The buffer cart 1004 is moved to a position in the buffer location 1300 to hold the first storage container, and the picking cart 1002 is moved to a position in the loading location 1200 to receive a second storage container from the storage system. When the picking cart 1002 is moved to the position at the picking location 1100 with the second storage container, the buffer cart 1004 is moved to the loading location 1200 in order to return the first storage container to the storage system.

Operation of the conveyor system 1000 may be controlled by a control system (e.g., as described above with respect to Fig. 4).

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A conveyor system for a port in an automated storage and retrieval system, the conveyor system comprising:
a rail; and
a cart moveable along the rail between a first position and a second position, and configured to receive a storage container thereon;
wherein the cart comprises a gripping mechanism configured to releasably engage a storage container on the cart so as to hold the storage container in a fixed position relative to the cart as the cart moves along the rail.

2. A conveyor system according to claim 1, wherein the gripping mechanism comprises an engagement member which is moveable between a raised position for engaging a side of a storage container and a lowered position in which the engagement member does not engage a side of a storage container.

3. A conveyor system according to claim 2, wherein the cart comprises a cam surface for moving the engagement member between the raised position and the lowered position.

4. A conveyor system according to claim 3, wherein the gripping mechanism is moveable relative to the cart and the cam surface is fixed to the cart, and wherein moving the gripping mechanism relative to the cart moves the engagement member along the cam surface to raise or lower the engagement member.

5. A conveyor system according to claim 4, further comprising a pusher rail, wherein the gripping mechanism comprises a mounting portion for moveably mounting the gripping mechanism on the pusher rail.

6. A conveyor system according to claim 5, wherein the pusher rail is mounted on the cart.

7. A conveyor system according to any one of claims 3 to 5, wherein the cam surface comprises a low-friction and/or a wear-resistant coating.

8. A conveyor system according to any one of claims 3 to 7, wherein the engagement member is biased towards the lowered position.

9. A conveyor system according to claim 2, wherein the engagement member is biased towards the raised position.

10. A conveyor system according to claim 9, wherein the gripping mechanism further comprises biasing means for biasing the engagement member towards the raised position, wherein the biasing means is configured such that the engagement member moves towards the lowered position responsive to receiving the weight of a storage container thereupon.

11. A conveyor system according to claim 9 or 10, wherein the engagement member further comprises a wheel or a roller for allowing movement of a storage container across the engagement member when the engagement member is in the lowered position.

12. A conveyor system according to any preceding claim, wherein the cart is a picking cart and the second position is a picking position, the conveyor system further comprising a buffer cart moveable along the rail and configured to receive a storage container thereon.

13. A conveyor system according to claim 12, wherein the gripping mechanism is moveable relative to the picking cart so as to push a storage container from the picking cart to the buffer cart.

14. A conveyor system according to claim 13, wherein the gripping mechanism comprises an upstanding flange for engaging a side of a storage container as the gripping mechanism pushes the storage container from the picking cart to the buffer cart.

15. A gripping mechanism for use in a conveyor system according to any preceding claim, wherein the gripping mechanism comprises:
a mounting portion for mounting the gripping member on a cart; and
an engagement member configured to releasably engage a storage container on the cart.
